# EUROPÄISCHE PATENTANMELDUNG

(11) **EP 1 639 883 A1**
(43) Veröffentlichungstag der Anmeldung: **29.03.2006**
(21) Anmeldenummer: 05108501.7
(22) Anmeldetag: 15.09.2005
(51) Int. Cl.: A01G 1/00, A01C 1/04

(54) **Pflanzsode und Verfahren zur Herstellung derselben**

(30) Priorität: 24.09.2004 DE 102004046570; 17.03.2005 DE 102005012278
(71) Anmelder: Merschmann, Thomas, 33104 Paderborn (DE)
(72) Erfinder: Merschmann, Thomas, 33104 Paderborn (DE)
(74) Vertreter: Hanewinkel, Lorenz

(57) **Zusammenfassung**

Die Erfindung beschreibt eine Pflanzsode (1) aus einem untenseitig im Wesentlichen ebenen Bodensubstrat (10), das durch eine darin in einem Wurzelgeflecht (11) verwurzelten Pflanzendecke (12) zusammengehalten ist, wobei die Pflanzendecke (12) aus weiß und/oder farbig blühenden Bodendeckerstauden besteht. Weiterhin wird das Verfahren zur Herstellung solcher Pflanzsoden (1) und die Begrünung von Böschungen (B) und Uferbereichen beschrieben.

## Beschreibung

Die Erfindung beschreibt eine Pflanzsode aus einem untenseitig im Wesentlichen ebenen Bodensubstrat, das durch eine darin in einem Wurzelgeflecht verwurzelte Pflanzendecke zusammengehalten ist und ein Verfahren zur Herstellung solcher Pflanzsoden.

Es ist seit längerem bekannt mit Grasssoden eine zusammenhängende Fläche sofort zu begrünen. Dabei sind die Grasssoden in Bahnen von einem Feld oder Wiese abgenommen und zu Rollen zusammengedreht (Rollrasen), die dann auf der zu begrünenden Fläche dicht an dicht ausgerollt werden und eine zusammenhängende Rasenfläche bilden.

Auch ist bekannt, Bodendeckerpflanzen in Töpfen vorzuziehen und diese vorgezogenen Pflanzen in regelmäßigen Abständen auf eine zu gestaltende Fläche zu pflanzen. Dabei bildet sich aber nur eine ungleichmäßige Pflanzendecke aus und die Fläche schließt sich erst nach einem gewissen Zeitraum, abhängig von der Wuchsgeschwindigkeit der gewählten Pflanzen.

In der Gebrauchsmusterschrift DE 297 21 620 U1 ist eine Pflanzenmatte beschrieben, bei der ein schichtartiger Aufbau der Matte vorgesehen ist. Die Schichtung wird durch eine Unterlage aus verrottbarem Material erreicht, die mit einem Kultursubstrat abgedeckt ist, in die Jungpflanzen oder Stecklinge eingesetzt werden. Es ist nicht gezeigt, wie Pflanzsoden ohne einen schichtartigen Aufbau auch mit Samenmaterial gebildet werden können und wie mit der Matte Böschungen und Uferbereiche begrünt werden können.

Es ist Aufgabe der Erfindung anzugeben, wie ebene Flächen mit Pflanzsoden aus einem anderen Bodendecker als Gras in kurzer Zeit gestaltet werden können und wie die Soden aufgebaut werden, um Böschungen und Uferbereiche zu begrünen. Außerdem soll ein Verfahren zur Herstellung solcher Pflanzsoden gezeigt werden.

Gelöst wird diese Aufgabe durch die kennzeichnenden Merkmale der Ansprüche 1, 5 und 15. Das Verfahren wird gemäß den Merkmalen des Anspruchs 10 durchgeführt.

Vorteilhafte Ausführungsformen der Erfindung sind in den Unteransprüchen angegeben.

Die ansprechende Gestaltung kleinerer Flächen mit blühenden Bodendeckern ist rationell möglich, indem Pflanzsoden eingesetzt werden, die aus weiß und/oder farbig blühenden Bodendeckerstauden bestehen. Diese bilden festes Wurzelgeflecht aus, welches die Sode zusammenhält. Sie können dicht gereiht verlegt werden, so dass sich eine geschlossene, in der jeweiligen Farbe gestaltete Fläche ergibt.

Besonders geeignet für eine solche Sode ist die Bodendeckerstaude Sternmoos, die nur flach weiß blüht und ein festes Wurzelgeflecht bildet.

Die Pflanzsoden sind gut handhabbar, wenn sie Seitenlängen von 35 bis 115 cm besitzen.

Die Herstellung einer im Wesentlichen Pflanzsode ist in einem Saatkasten besonders einfach, der einen geschlossenen Boden und eine dazu im annähernd rechten Winkel umlaufende Zarge besitzt. Die Zarge besitzt vorteilhafterweise einen randseitig überstehenden Kragen, der für ein sicheres Stapeln unter Freilassung eines Freiraumes über der Pflanzendecke sorgt. Die annähernd vertikalen Seitenflächen der Soden ermöglichen ein praktisch fugenfreies Verlegen, so dass sofort eine völlig ebene Oberfläche eines belegten Beetes entsteht.

Die ansprechende Gestaltung von Böschungen und Uferrandbereichen mit einer sofort geschlossenen Pflanzendecke ist rationell möglich, indem Pflanzsoden eingesetzt werden, bei denen die Pflanzen in mindestens eine offenmaschige, quer durchgehende Matte eingewachsen sind. Die Pflanzen bilden ein festes Wurzelgeflecht aus, welches von den Matten zusätzlich zusammengehalten wird. Es ist günstig, wenn die Matte an einer oder zwei Seiten mit einem Verbindungsbereich über die Pflanzsode hinaus ragt. Die Pflanzsoden können dicht gereiht verlegt werden, so dass sich eine geschlossen gestaltete Fläche ergibt.

Die Matten bestehen vorteilhafterweise aus Kokosfasern oder entsprechenden anderen Pflanzenfasern. Dabei besitzen die Matten eine Maschenweite, die zwischen 5 mm und 50 mm, vorzugsweise 30 mm weit ist.

Die Maschenweite der Matten ist entsprechend der verwendeten Pflanzenart gewählt. Je feineres Wurzelgeflecht die Pflanzen ausbilden, desto enger wird die Maschenweite genommen. Dabei wird vorteilhaft bei einer mehrschichtigen Mattenanordnung die obere Matte mit einer weiteren Maschenweite gewählt als die untenseitige.

Eine geschlossene Pflanzsodendecke an einer Böschung und/oder Uferzone ergibt sich dadurch, dass der jeweils böschungsaufwärts gerichtete Verbindungsbereich der jeweils an der Böschung tiefer liegend angeordneten Pflanzsode unter die jeweils an der Böschung höher angeordneten Pflanzsode verlegt wird, und der Verbindungsbereich der jeweils höchstgelegenen Pflanzsode in das dortige Erdreich eingegraben, unter der höchstgelegenen Pflanzsode untergeschlagen und/oder mit Heringen verankert wird. Seitlich werden die Pflanzsoden miteinander verbunden, indem ein an der Pflanzsode seitlich angeordnete Verbindungsbereich unter die jeweils benachbarte Pflanzsode gelegt wird. Dies gibt insbesondere bei Fließgewässerböschungen einen Halt gegen Wegschwemmen.

Ein wirkungsvoller Halt an steileren Böschungen wird zwischen den Pflanzsoden erreicht, indem die Verbindungsbereiche mittels Zinken und/oder Haken in der angrenzenden Pflanzsode verhakt sind. Die Fasern des Verbindungsbereichs verhaken sich mit den Fasern der benachbarten Matten und bilden auf diese Weise eine nicht auseinander rutschende Fläche. Dabei ist es günstig, dass der Verbindungsbereich eine Breite besitzt, die in etwa ¼ bis einer Sodenbreite entspricht. Dieser Verbindungsbereich wird vorzugsweise an der Böschung nach unten gerichtet verlegt.

Dabei sind die Matten in der Weise orientiert, dass die kapillaren Fasern der Matte bergauf verlegt sind und damit Feuchtigkeit aufsteigen kann.

Es können auch Böschungen im Uferbereich, der mit Teichfolie ausgelegt ist, bepflanzt werden.

Die Pflanzsoden sind auf einer Böschung bei Bodenberührung zunächst mit den Matten gehalten, bis sich die Pflanzen auch mit dem Untergrund verwurzelt haben. Da dies einige Zeit dauern kann, sind die Matten mit einem verrottungshemmenden Mittel imprägniert.

Ein Uferbereich an Fließgewässern oder Ausflüssen wird vorteilhafterweise so bepflanzt, dass uferseitig unten gelegene Pflanzsoden vorwiegend mit Wasserpflanzen wie Teichlilie, Rohrkolben, und höher gelegene Pflanzsoden vorwiegend mit Pflanzen wie Pfennigkraut, Sumpfdotterblumen, Schilf, Corexgräser, besetzt sind.

Das Verfahren zur Herstellung einer Pflanzsode in einem Saatkasten gemäß der vorangehenden Beschreibung gestaltet sich in folgenden Schritten:
- in den Saatkasten wird ein Bodensubstratbett von etwa 5 cm Höhe eingebracht,
- es wird Samen von Bodendeckerstauden, etwa Sternmoos, auf dem Substratbett gleichmäßig verteilt und angedrückt,
- dabei beträgt die Verteilung etwa 1000 bis 2000 Samenkörner pro qm,
- die Aussaat wird belichtet und gewässert bis sich ein dichtes Wurzelgeflecht gebildet hat und eine dichte Pflanzendecke entstanden ist,
- die fertige Sode wird herausgenommen und ausgepflanzt.

Eine gleichmäßige Verteilung des Samens auf dem Saatbett wird vorzugsweise dadurch erreicht, dass die Samenkörner peletiert und mittels einer Schablone aufgebracht werden. Dabei können natürlich auch mehrere Samenarten verschieden blühender Stauden mit unterschiedlichen Schablonen in Mustern verteilt auf das Saatbett aufgebracht werden.

Auch können die Samenkörner in einem verrottbaren Vlies eingebettet sein und auf diese Weise beliebige Muster erzeugt werden.

Eine geschlossene Bodendeckerstaudendecke ergibt sich dadurch, dass die nach den vorbeschriebenen Verfahren hergestellten Pflanzsoden dicht gereiht auf die zu gestaltende Fläche aufgebracht werden. Durch die annähernd senkrechten Kanten der Soden verwachsen diese schnell zu einer gleichmäßigen Fläche.

Eine Ausführungsform der Erfindung ist in den Figuren beispielhaft beschrieben
Fig. 1 zeigt einen Ausschnitt einer Pflanzsode in einem Saatkasten.
Fig. 2 zeigt einen Querschnitt durch eine Pflanzsode mit eingelegten Matten
Fig. 3 zeigt das Aneinanderlegen von Pflanzsoden.
Fig. 4 zeigt eine Pflanzsode von oben mit zwei Verbindungsbereichen.
Fig. 5 zeigt eine geschlossen Fläche mit Pflanzsoden.
Fig. 6 zeigt eine Fläche mit Pflanzsoden und den Verbindungsbereichen der Matten
Fig. 7 zeigt die Verlegung von Pflanzsoden an einer Böschung.

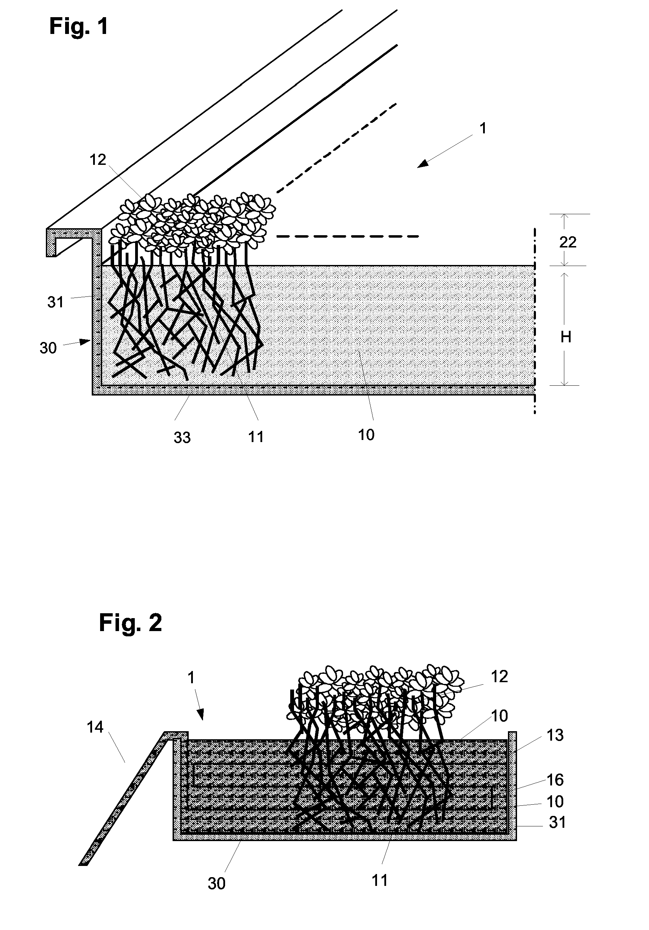

Die Fig. 1 zeigt in dem Saatkasten 30 die Pflanzsode 1. Diese besteht aus dem Bodensubstrat 10, dem Wurzelgeflecht 11 und der Planzendecke 12.

Der Saatkasten 30 besteht aus dem Boden 33 und der Zarge 31, die durch den Kragen 32 abgeschlossen ist. Auf dem Kragen 32 befmden sich die Zentrierausnehmungen 35, die ein sicheres Stapeln der Kästen ermöglichen. Der Höhe des Saatkastens wird durch die Höhe H des Bodensubstrats 10 und dem Freiraum 22 für die Pflanzendecke 12 bestimmt. Die Zarge 31 steht annähernd senkrecht auf dem Boden 33, so dass sich eine senkrechte Pflanzkante der Sode ergibt.

Die Fig. 2 zeigt einen Querschnitt durch eine Pflanzsode 1. Die Pflanzsode 1 befmdet sich vor dem Ausbringen in einem Saatkasten 30, in den mehrere Schichten von Bodensubstrat 10 und Matten 13, 16 aus Kokosfasern oder ähnlichem eingebracht sind. An einer Seite sind die innere Matte 13 und die untere Matte 16 miteinander verbunden. Sie bilden somit eine Tasche für den mittleren Substratbereich. Vorzugsweise ist an der an der gegenüberliegenden Seite, die beim Verlegen bergauf liegt, der Verbindungsbereich 14 angebracht, der über den Seitenrand 31 des Saatkastens 30 heraus reicht. Die Pflanzendecke 12 bildet ein Wurzelwerk 11 aus, welches die Schichten aus Bodensubstrat 10 und die Matten 13, 16 durchwächst. Somit entsteht eine geschlossene, feste Pflanzsode, die auch weiter bearbeitet oder zerschnitten werden kann

In Fig. 3 ist dargestellt, wie mehrere Pflanzsoden 1 aneinander gelegt sind.

Dabei wird die jeweils nächste Pflanzsode 1 so auf den Verbindungsbereich 14 der vorangehenden Pflanzsode 1 gelegt, dass sie direkt aneinander grenzen. Dabei kann auch noch der Saatkasten 30 vorhanden sein, wenn er aus verrottbarem Material besteht. Auf diese Weise entsteht mit dem Verlegen sofort eine geschlossene begrünte Fläche.

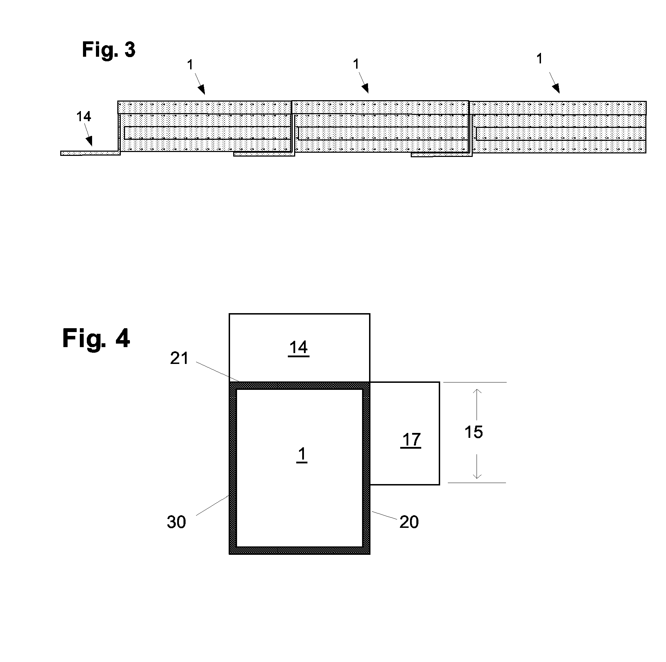

In Fig. 4 ist eine Pflanzsode 1 in einem Saatkasten 30 in Draufsicht dargestellt. An der Sodenlängsseite 20 ist der Verbindungsbereich 17 und an der Sodenbreitseite 21 der Verbindungsbereich 14 vorhanden. Diese Verbindungsbereiche 14, 17 sind auch aus Kokosfasern oder ähnlichem hergestellt. Dabei besitzen die Verbindungsbereiche 14, 17 eine Breite 15, die bis zu einer Sodenbreite 21 betragen kann.

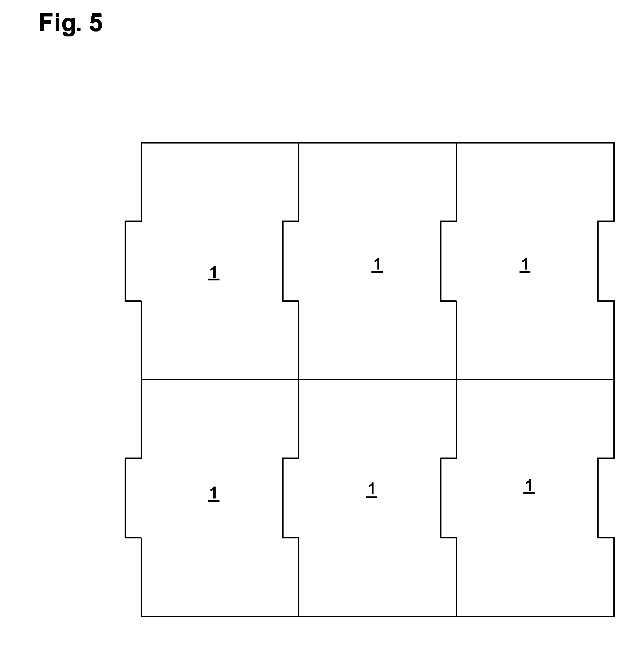

In Fig. 5 ist eine Fläche aus Pflanzsoden 1 dargestellt, die in Saatkästen gemäß Fig. 1 hergestellt wurden. Es wird deutlich, wie die Soden lückenlos aneinander passen und schnell miteinander verwachsen können. An der äußeren Kante der Fläche lassen sich die Soden bei Bedarf sehr einfach gerade abstechen.

Bei entsprechend hergestellten Pflanzsoden lassen sich sehr einfach Muster mit den Soden auf der Fläche legen.

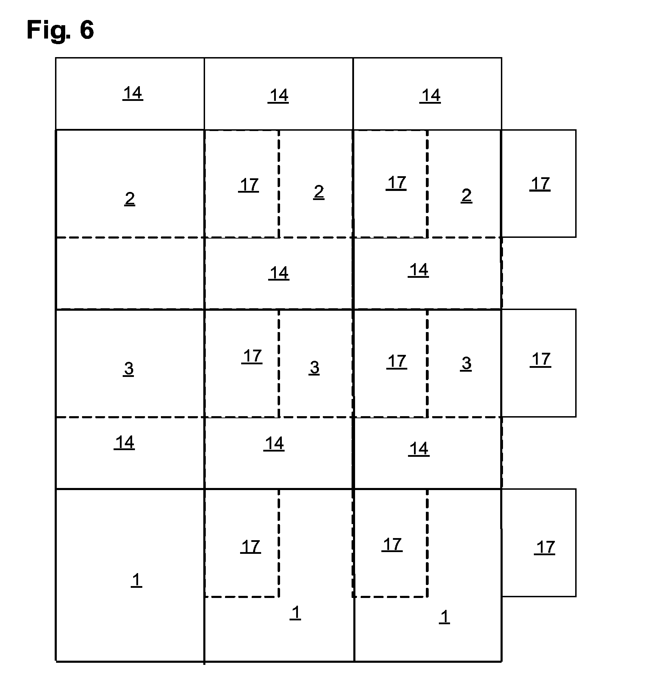

In Fig. 6 ist ein Verband von Pflanzsoden 1 dargestellt, die eine geschlossene Fläche bilden. In dem unteren Bereich liegen die Pflanzsoden 1 mit ihren Verbindungsbereichen 14, 17. Auf diese Verbindungsbereiche 14 werden die folgenden Pflanzsoden 3 aufgelegt. Dabei verhaken sich die Verbindungsbereiche 14, 17 mit den jeweils aufgelegten Pflanzsoden 1, 3, 2 und bilden somit eine feste, zusammenhängende Fläche. Die höchstliegenden Pflanzsoden 2 besitzen frei liegende Verbindungsbereiche 14, an denen, zum Beispiel durch Eingraben oder mit Heringen, der Pflanzsodenverband auf einer Böschung befestigt wird. Ebenso können die freien Verbindungsbereiche 17 am Rand des Verbandes mit dem Untergrund verbunden werden.

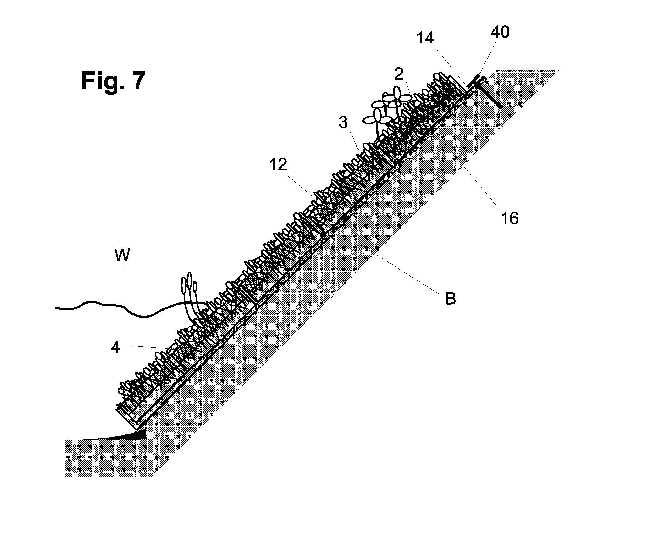

In Fig. 7 ist ein Verband von Pflanzsoden 2, 3, 4 an einer Böschung B dargestellt. Die Pflanzsoden 2, 3, 4 liegen mit ihrer unteren Matte 16 jeweils auf der Böschung B auf und sind miteinander verhakt. Der freie Verbindungsbereich 14 an den oberen Pflanzsoden 2 ist mit Heringen 40 an der Böschung B befestigt. Die Pflanzendecke 12 kann in den einzelnen Bereichen aus verschiedenen Pflanzen bestehen. So können unter dem Wasserspiegel W oder in dessen Einflussbereich die Pflanzsoden 4 mit Wasserpflanzen besetzt sein, während in den trockenen Bereichen die Pflanzsoden 2 und 3 mit Pflanzen für trockenen und feuchten Boden besetzt sind.

### Bezugszeichenliste

- 1: Sode
- 2: Höchst liegende Sode
- 3: Mittig liegende Sode
- 4: Im Wasserbereich liegende Sode
- 10: Bodensubstrat
- 11: Wurzelgeflecht
- 12: Pflanzendecke
- 13: Matte
- 14: Verbindungsbereich
- 15: Breite des Verbindungsbereichs
- 16: untere Matte
- 17: seitlicher Verbindungsbereich
- 20: Sodenlängsseite
- 21: Sodenbreitseite
- 22: Freiraum
- 30: Saatkasten
- 31: Zarge
- 33: Boden

- B: Böschung
- H: Saatbetthöhe
- W: Wasserspiegel
- LL: Länge - Längsseite
- LB: Länge - Breitseite

## Patentansprüche

1. Pflanzsode (1) aus einem untenseitig im Wesentlichen ebenen Bodensubstrat (10), das durch eine darin in einem Wurzelgeflecht (11) verwurzelten Pflanzendecke (12) zusammengehalten ist, **dadurch gekennzeichnet, dass** die Pflanzsode in einem Saatkasten (30) zusammenwächst und die Pflanzendecke (12) aus weiß und/oder farbig blühenden Bodendeckerstauden besteht.

2. Pflanzsode nach Anspruch 1, **dadurch gekennzeichnet, dass** der Bodendecker Sternmoos ist.

3. Pflanzsode nach Anspruch 1 oder 2, **dadurch gekennzeichnet, dass** sie Seitenlängen (LL, LB) von 35 cm bis 115 cm besitzt.

4. Pflanzsode nach Anspruch 2 oder 3, **dadurch gekennzeichnet, dass** der Saatkasten (30) einen geschlossenen Boden (33) und annähernd senkrechte Zargen (31) dazu besitzt.

5. Pflanzsode nach einem der Ansprüche 1 bis 4, **dadurch gekennzeichnet, dass** unter dem Wurzelgeflecht (11) mindestens eine offenmaschige Matte (13) quer durchgehend eingewachsen ist und die Matte (13) die Pflanzsode (1) an einer oder zwei Seiten (20, 21) jeweils um einen Verbindungsbereich (14) seitlich frei überragt.

6. Pflanzsode nach Anspruch 5, **dadurch gekennzeichnet, dass** die Matten (13) aus Kokosfaserfäden und/oder anderen Pflanzenfasern besteht und eine Maschenweite von ca. 5 * 5 mm² bis ca. 30 * 30 mm² aufweist.

7. Pflanzsode nach Anspruch 6, **dadurch gekennzeichnet, dass** die Maschenweite umso kleiner ist, je feiner das Wurzelgeflecht der betreffenden Pflanzenart ist.

8. Pflanzsode nach Anspruch 5, **dadurch gekennzeichnet, dass** der Verbindungsbereich (14) eine Breite (15) hat, die in etwa ¼ bis einer Hälfte einer Sodenbreite (21) entspricht.

9. Pflanzsode nach einem der Ansprüche 5 bis 8, **dadurch gekennzeichnet, dass** die Matte (13, 16) mit verrottungshemmenden Mitteln imprägniert ist.

10. Verfahren zur Herstellung einer Pflanzsode (1) in einem Saatkasten (30), **dadurch gekennzeichnet, dass** ein Bodensubstrat-Saatbett (10) von 5 cm Höhe (H) in diesen eingebracht wird und Sternmoossamen und/oder andere Bodendeckerstauden in einer Verteilung von 1000 bis 2000 Samenkörnern pro qm gleichverteilt darauf ausgebracht und angedrückt werden und diese Aussaat belichtet und bewässert aufgezogen wird, bis ein dichtes Wurzelgeflecht (11) und eine dichte Pflanzendecke entstanden ist, wonach die fertige Sode herausgenommen und ausgepflanzt wird.

11. Verfahren nach Anspruch 5, **dadurch gekennzeichnet, dass** die Samenkörner pelletiert werden und mittels einer Schablone auf das Saatbett (10) aufgebracht werden.

12. Verfahren nach Anspruch 6, **dadurch gekennzeichnet, dass** mehrere Samenarten verschieden blühender Stauden mit unterschiedlichen Schablonen in Mustern verteilt auf das Saatbett (10) aufgebracht werden.

13. Verfahren nach Anspruch 5, **dadurch gekennzeichnet, dass** die Samenkörner in ein verrottbares Vlies eingebettet werden.

14. Verfahren zur Herstellung einer geschlossenen Bodendeckerstaudendecke, **dadurch gekennzeichnet, dass** nach einem der Ansprüche 12 bis 15 hergestellte Pflanzsoden dicht an dicht gereiht werden.

15. Pflanzensodendecke an einer Böschung und/oder Uferzone mit Pflanzsoden (1) nach einem der Ansprüche 5 bis 9, **dadurch gekennzeichnet, dass** der jeweils böschungsaufwärts gerichtete Verbindungsbereich (14) der jeweils an der Böschung (B) tiefer liegend angeordneten Pflanzsode (1) unter die jeweils an der Böschung (B) höher angeordneten Pflanzsode (1) verlegt ist, und der Verbindungsbereich (14) der jeweils höchstgelegenen Pflanzsode (1) in das dortige Erdreich eingegraben, unter der höchstgelegenen Pflanzsode (1) untergeschlagen und/oder mit Heringen (40) verankert ist.

16. Pflanzensodendecke nach Anspruch 15, **dadurch gekennzeichnet, dass** ein jeweils seitlich an der Pflanzsode (1) seitlich angeordneter Verbindungsbereich (17) unter die jeweils benachbarte Pflanzsode (1) gelegt ist.

17. Pflanzensodendecke nach Anspruch 15 oder 16, **dadurch gekennzeichnet, dass** die kapillaren Fasern der Matte (13) bergauf verlegt sind.

18. Pflanzensodendecke nach einem der Ansprüche 15 bis 17, **dadurch gekennzeichnet, dass** der/die Verbindungsbereich/e (14,17) mittels Zinken und/oder Haken in der aufgelegten Pflanzsode (1) verhakt ist/sind.

19. Pflanzensodendecke nach einem der Ansprüche 15 bis 18, **dadurch gekennzeichnet, dass** uferseitig unten gelegene Pflanzsoden (4) vorwiegend mit Wasserpflanzen, wie Sumpfdotterblumen, Rohrkolben, Wasserlilie, Wasserminze und die höher gelegenen Pflanzsoden (3) vorwiegend mit Bodenpflanzen, wie Farne, Stauden, Gräser besetzt sind.
